# EUROPÄISCHE PATENTSCHRIFT

(11) **EP 2 098 089 B1**
(45) Veröffentlichungstag und Bekanntmachung des Hinweises auf die Patenterteilung: **16.09.2015**
(21) Anmeldenummer: 07819566.6
(22) Anmeldetag: 03.11.2007
(51) Int. Cl.: H04W 8/24

(54) **VERFAHREN UND VORRICHTUNGEN ZUM KONFIGURIEREN VON DIENSTEN IN EINEM MOBILEN ENDGERÄT EINES MOBILFUNKNETZES**
METHOD AND DEVICES FOR CONFIGURING SERVICES IN A MOBILE TERMINAL OF A MOBILE RADIO NETWORK
PROCÉDÉS ET DISPOSITIFS DE CONFIGURATION DE SERVICES DANS UN TERMINAL MOBILE D'UN RÉSEAU DE TÉLÉPHONIE MOBILE

(30) Priorität: 24.11.2006 DE 102006055472
(43) Veröffentlichungstag der Anmeldung: 09.09.2009
(73) Patentinhaber: T-Mobile International AG, 53227 Bonn (DE)
(72) Erfinder: KLEO, Rémi, 53332 Bornheim (DE)
(74) Vertreter: Riebling, Peter
(86) Internationale Anmeldenummer: PCT/EP2007/009543
(87) Internationale Veröffentlichungsnummer: WO 2008/061617

(56) Entgegenhaltungen:
- EP-A- 0 877 531
- EP-A- 1 447 945
- WO-A-02/104062
- DE-A1- 19 930 170
- US-A1- 2004 038 675
- US-A1- 2004 082 346
- US-A1- 2005 060 363

## Beschreibung

Die Erfindung betrifft ein Verfahren zum Konfigurieren von Diensten in einem mobilen Endgerät eines Mobilfunknetzes, beispielsweise eines GSM-Mobilfunknetzes.

Viele Dienste, die von einem Mobilfunknetz angeboten werden, benötigen eine Konfiguration der entsprechenden Anwendung im mobilen Endgerät. Diese Dienste umfassen beispielsweise den mobilen Internetzugang, MMS Dienst (Multimedia Messaging Service), Email Dienst oder einen Push-to-Talk Dienst. Die Dienste werden über entsprechende Parameter konfiguriert, beispielsweise Rufnummern, IP-Adressen, Internetadressen, etc. Wenn die Parameter für den entsprechenden Dienst im Endgerät nicht richtig konfiguriert sind, kann der Kunde den Dienst nicht nutzen. Der Kunde muss dann entweder diese Parameter manuell ändern, oder er kann sich vom Netzbetreiber oder Diensteanbieter eine Kurznachricht (SMS) mit Konfigurationsdaten zusenden lassen. Beide Verfahren sind aus Sicht des Kunden umständlich und zeitraubend.

WO 02/104062 A1 offenbart ein Verfahren zum Konfigurieren von Roaming Diensten in einem mobilen Endgerät eines Mobilfunknetzes nach dem Oberbegriff des Anspruchs 1, bei dem Konfigurationsdaten von einem datenvermittelnden Netzelement des Mobilfunknetzes in bestehenden Signalisierungs- oder Systemnachrichten an das mobile Endgerät übertragen werden.

EP 0877 531 A2 offenbart ebenfalls ein Verfahren zum Konfigurieren eines mobilen Endgeräts, bei dem Konfigurationsdaten in Signalisierungs- oder Systemnachrichten übertragen werden.

Es ist die Aufgabe der Erfindung, ein Verfahren und eine Vorrichtung anzugeben, die eine einfache und schnelle Konfiguration von Diensten in mobilen Endgeräten ermöglichen.

Diese Aufgabe wird erfindungsgemäß durch die Merkmale des Anspruchs 1 bzw. des Anspruchs 16 gelöst. Ein Datenverarbeitungsprogramm sowie eine Datenverarbeitungsprogrammprodukt mit einem Programmcode zur Durchführung des Verfahrens sind in den Ansprüchen 14 und 15 angegeben.

Bevorzugte Ausgestaltungen und weitere vorteilhafte Merkmale der Erfindung sind in den abhängigen Ansprüchen angegeben.

Das erfindungsgemäße Verfahren zum Konfigurieren von Diensten in mobilen Endgeräten eines Mobilfunknetzes ist dadurch gekennzeichnet, dass Konfigurationsdaten von einem datenvermittelnden Netzelement des Mobilfunknetzes in vorhandenen Signalisierungs- oder Systemnachrichten an das mobile Endgerät übertragen werden. Die Konfigurationsdaten sind vorzugsweise mit einem Zeitstempel und/oder einer Versionskennzeichnung versehen. Das datenvermittelnde Netzelement kann vorzugsweise eine Mobilvermittlungsstelle MSC oder ein GPRS Dienstknoten SGSN sein.

In bevorzugter Weise werden vor einer Übermittlung der Konfigurationsdaten an das Endgerät Statusdaten vom mobilen Endgerät in vorhandenen Signalisierungs- oder Systemnachrichten an das datenvermittelnde Netzelement des Mobilfunknetzes übertragen. Die Statusdaten umfassen zumindest Informationen über den Zeitpunkt der letzten Änderung der Konfigurationsdaten.

Sowohl die Konfigurationsdaten als auch die Statusdaten können als zusätzliches Informationselement in den vorhandenen Signalisierungs- oder Systemnachrichten übertragen werden. Andererseits können aber auch neue Nachrichten in einem standardisierten Format, z. B. MAP Format, erzeugt werden.

Gemäß einer bevorzugten Ausgestaltung der Erfindung können die Konfigurationsdaten in einer "Attach Accept" Nachricht oder "Location Update Accept" Nachricht vom datenvermittelnden Netzelement an das mobile Endgerät übertragen werden.

Die Statusdaten können bevorzugte in einer "Attach Request" Nachricht oder "Location Update Request" Nachricht vom mobilen Endgerät an das datenvermittelnde Netzelement übertragen werden.

Die Konfigurationsdaten werden in einem datenspeichernden Netzelement des Mobilfunknetzes gespeichert und für einen Abruf bereitgestellt. Die Konfigurationsdaten können auch im datenvermittelnden Netzelement zwischengespeichert werden.

Im datenvermittelnden Netzelement wird anhand der vom Endgerät empfangenen Statusdaten geprüft, ob eine Aktualisierung der Konfigurationsdaten im mobilen Endgerät vorgenommen werden muss. Zutreffendenfalls werden aktuelle Konfigurationsdaten vom datenvermittelnden Netzelement an das mobile Endgerät übertragen. Falls im datenvermittelnden Netzelement keine aktuellen Konfigurationsdaten vorhanden sind, kann das datenvermittelnde Netzelement aktuelle Konfigurationsdaten für das mobile Endgerät vom datenspeichernden Netzelement anfordern, wonach die aktuellen Konfigurationsdaten vom datenspeichernden Netzelement an das datenvermittelnde Netzelement übertragen werden.

Das datenspeichernde Netzelement kann vorzugsweise ein dem mobilen Endgerät zugeordnetes Heimatregister HLR sein. Im datenspeichernden Netzelement werden die Konfigurationsdaten durch den Betreiber des Mobilfunknetzes oder einen Diensteanbieter ständig aktualisiert.

Die Datenübertragung zwischen dem datenvermittelnden und dem datenspeichernden Netzelement erfolgt vorzugsweise mittels Mobile Application Part Protokoll MAP.

Mit anderen Worten beruht die Erfindung darauf, dass das Endgerät das Mobilfunknetz informiert, wann es die Parameter für die Konfiguration von Diensten zum letzten Mal geändert hat. Das Mobilfunknetz überprüft, ob aktuellere Konfigurationsdaten zur Verfügung stehen und übermittelt - wenn nötig - diese aktuellen Daten zum Endgerät.

Für die Anforderung und Übermittlung der Konfigurationsdaten werden existierende standardisierte Nachrichten durch neue Informationselemente ergänzt oder aber neue Nachrichten in einem standardisierten Format erzeugt.

Die notwendigen Standards sind in den folgenden technischen Dokumenten spezifiziert: 3GPP TS 23.060 V7.2.0 (2006-09): 3rd Generation Partnership Project; Technical Specification Group Services and System Aspects; General Packet Radio Service (GPRS); Service description; Stage 2 (Release 7);

3GPP TS 29.002 V7.5.0 (2006-09): 3rd Generation Partnership Project; Technical Specification Group Core Network and Terminals; Mobile Application Part (MAP) specification; (Release 7);

3GPP TS 24.008 V3.20.0 (2005-12): 3rd Generation Partnership Project; Technical Specification Group Core Network; Mobile radio interface layer 3 specification; Core Network Protocols; Stage 3 (Release 1999).

Nachfolgend werden zwei Ausführungsbeispiele der Erfindung anhand von Zeichnungen näher beschrieben.
Figur 1 zeigt eine schematische Darstellung der am Verfahren beteiligten Komponenten und ihr Zusammenwirken gemäß einem ersten Ausführungsbeispiel.
Figur 2 zeigt eine schematische Darstellung der am Verfahren beteiligten Komponenten und ihr Zusammenwirken gemäß einem zweiten Ausführungsbeispiel.
Figur 3 zeigt eine schematische Darstellung des grundsätzlichen Verfahrensablaufs.

Die Erfindung betrifft eine Konfiguration von Parametern und Daten für Dienste, die von einem mobilen Endgerät unterstützt werden. Jeder Dienst, z. B. MMS Dienst, wird durch bestimmte Parameter gekennzeichnet z. B.: IP Adressen. Erfindungsgemäß ist vorgesehen, dass eine Liste von Parametern für einen oder mehrere Dienste definiert wird. Für jeden Dienst können die notwendigen Parameter in einer beliebigen Reihenfolge definiert werden. Jeder Parameter wird durch einen Namen oder einen Code definiert und im Standard bekannt gegeben. Zusätzlich zu den Parametern wird für jeden Dienst in der Liste der Zeitpunkt der letzten Änderung angegeben (Zeitstempel). Die Zuweisung des Wertes zu einem Parameter wird durch ein vorgegebenes Zeichen definiert z. B. " = " (Gleichheitszeichen).
Die Trennung zwischen jedem Parameter innerhalb eines Parametersatzes wird durch ein vorgegebenes Zeichen definiert z.B. "," (Kommazeichen).
Die Trennung zwischen jedem Dienstparametersatz wird durch ein gegebenen Zeichen definiert z.B. " ; " (Strichpunktzeichen).

Ein Beispiel einer Liste von Parametern für MMS und SMS kann folgendermaßen aussehen:
MMS:LastUpdate=20060601122345,IP=1.2.3.4,URL=www.mms.com, APN=mms;SMS:SMSC=123456789, Lastupdate=20060601122345

Die Liste der Parameter für jeden Dienst sollte vollständig sein. Wenn ein Netzbetreiber eine unvollständige Liste von Parametern in einem Netzelement eingibt (konfiguriert, eintippt), sollte diese ebenfalls akzeptiert und bearbeitet werden. Die fehlenden Parameter werden ignoriert. Wenn eine unvollständige Liste zum Endgerät geschickt wird, muss das Endgerät die fehlenden Parameterwerte mit den schon vorhandenen Werten konfigurieren.

Zum Beispiel wenn der Betreiber einen Fehler beider Eingabe der Parameter gemacht hat und vergessen hat, die URL für MMS Dienste einzugeben, wird zum Endgerät gegebenenfalls eine Liste von Parametern ohne URL geschickt:
MMS:LastUpdate=20060601122345,IP=1.2.3.4,APN=mms;

Das Endgerät überschreibt dann die vorhandene IP Adresse und das APN, die bei MMS benutzt werden, und behält die vorhandene URL. Diese Art der Handhabung einer unvollständigen Liste von Parametern könnte beispielsweise benutzt werden, um einen einzigen Parameter für einen bestimmten Dienst zu ändern ohne dass ein kompletter Parametersatz übermittelt werden muss.

Diese Liste von Parametern kann in einer eigens erzeugten Nachricht oder einem zusätzlichen Informationselement einer vorhandenen Nachricht zwischen den beteiligten Komponenten übertragen werden.

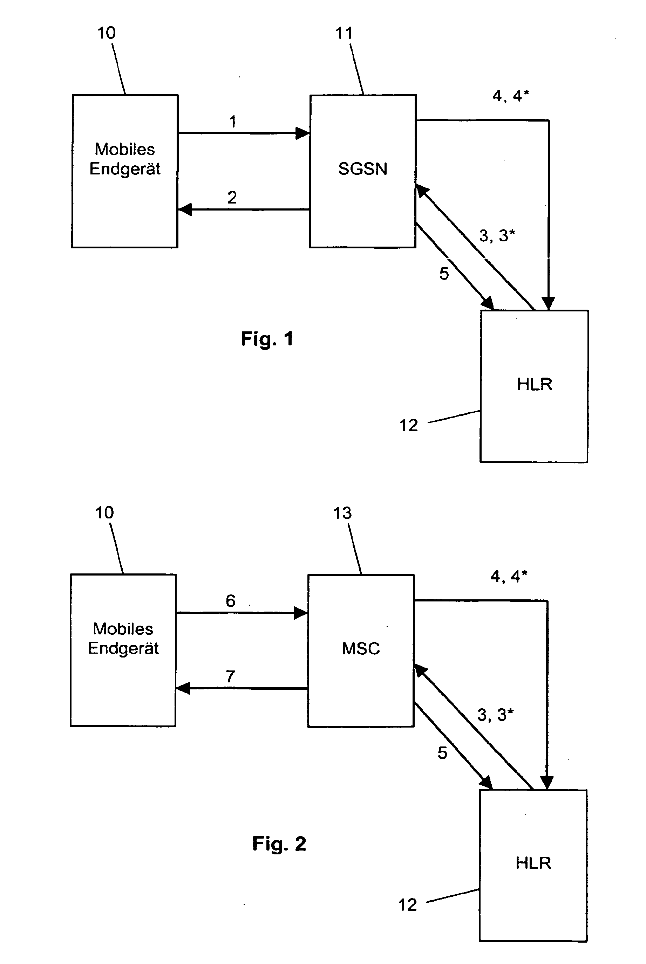

Im Ausführungsbeispiel gemäß Figur 1 wird die Erfindung anhand einer pakervermitelten Datenübertragung in einem GPRS Mobilfunknetz 2G oder 3G beschrieben. Am Verfahren sind grundsätzlich ein mobiles Endgerät 10, beispielsweise ein GPRS-fähiges Mobiltelefon, ein GPRS Dienstknoten SGSN 11 und ein dem mobilen Endgerät bzw. dem Teilnehmer zugeordnetes Heimatregister HLR 12 beteiligt. Über standardisierte Schnittstellen, beispielsweise Ua-Schnittstelle, Uu-Schnittstelle oder MAP-Schnittstelle, können die beteiligten Komponenten untereinander Daten austauschen.

Vorzugsweise werden existierende Nachrichten für den Datenaustausch zwischen Endgerät und SGSN durch Aufnahme von neuen Informationselementen modifiziert.

Zur Anmeldung des mobilen Endgeräts 10 im GPRS Netzwerk, muss eine sogenannte Attach Prozedur durchgeführt werden, wie sie beispielsweise im technischen Standard TS 24.008 beschrieben ist. Hierbei sendet das Endgerät 10 eine "Attach Request" Nachricht 1 an den SGSN 11. In der "Attach Request" Nachricht 1, wird ein neues Informationselement definiert. Dieses neue Informationselement könnte "last update" heißen und beinhaltet Informationen über den Zeitpunkt, an dem das Endgerät 10 zum letzten Mal eine (mindestens eine) Änderung seiner Konfigurationsdaten durchgeführt hat.

Der SGSN 11 überprüft anhand der Informationen des Endgerätes 10, ob für mindestens einen vom Endgerät unterstützten Dienst ein neuer Satz von Konfigurationsdaten zur Verfügung steht. Wenn dies nicht der Fall ist, wird die übliche Attach Prozedur durchgeführt. Wenn dies der Fall ist, übermittelt der SGSN 11 zusammen mit der sogenannten "Attach Accept" Nachricht 2 einen Parametersatz oder mehrere Parametersätze von Konfigurationsdaten für ein oder mehrere Dienste an das Endgerät 10. Hierzu wird in der "Attach Accept" Nachricht 2 ein neues Informationselement definiert. Dieses neue Informationselement könnte Parameter for update" heißen und beinhaltet die Liste der Konfigurationsparameter, die für einen oder mehrere Dienste im Endgerät 10 geändert werden müssen. Nachdem ein neuer Satz von Konfigurationsparametern oder mehrere neue Parametersätze zum Endgerät 10 geschickt wurde, überschreibt das Endgerät 10 den oder die alten Parametersätze mit dem oder den neuen Parametersätzen und speichert den Zeitpunkt des letzten Updates.

Wenn ein Endgerät 10 einen Parametersatz bekommt für einen Dienst den es nicht unterstützt, so wird der Zeitstempel des letzten Updates mit dem aktuellen Zeitpunkt überschreiben, wobei aber die eigentlichen Konfigurationsdaten für diesen Dienst ignoriert werden.
Wenn ein Endgerät 10 das erfindungsgemäße Verfahren nicht unterstützt oder nicht nutzen soll, so wird kein Zeitstempel zum SGSN 11 geschickt und die übliche Attach Prozedur durchgeführt.

Der SGSN 11 hält in einem Speicher eine Liste von Konfigurationsdaten für Dienste vor, die für sein eigenes Mobilfunknetz definiert sind und gegebenenfalls für die Roamingpartner. Der SGSN 11 kann für Kunden aus dem eigenen Mobilfunknetz eine andere Prozedur als für Roamingkunden benutzen. Der SGSN könnte auch auf ein Update der Konfigurationsparameter für Roamingkunden verzichten.

Diese Liste mit Konfigurationsdaten wurde dem SGSN 11 entweder vorab vom HLR 12 zur Verfügung gestellt und liegt dort bereits vor, oder wird aktiv vom SGSN 11 angefordert, falls das Endgerät 10 ein Update der Konfigurationsdaten benötigt oder vom Betreiber im SGSN 11 direkt eingeben.

Ein Datenaustausch zwischen SGSN 11 und HLR 12 erfolgt über die MAP-Schnittstelle. Erfindungsgemäß können neue MAP Nachrichten für die Abfrage und die Übermittlung von Konfigurationsdaten zwischen SGSN 11 und HLR 12 definiert werden.

Eine automatische Aktualisierung der Konfigurationsdaten im SGSN 11 durch das HLR kann wie folgt durchgeführt werden:
Es wird eine neue MAP Nachricht 3 definiert, mittels welcher das HLR 12 dem SGSN 11 eine Liste von Konfigurationsdaten für das Endgerät 10 zusenden kann. Diese MAP Nachricht 3 beinhaltet eine Liste von Konfigurationsparameter für einen oder mehrere Dienste, sowie die Netzwerk- und Landeskennung (Mobile Country Code, Mobile Network Code) des Betreibers des HLR 12. Diese MAP Nachricht 3 kann beispielsweise "Update Service Parameter" genannt werden.

Eine Aktualisierung der Konfigurationsdaten im SGSN 11 durch das HLR 12 auf Anforderung des SGSN 11 kann wie folgt durchgeführt werden:
Eine neue MAP Nachricht 4 wird definiert, mittels welcher der SGSN 11 beim HLR 12 aktiv ein Update von Konfigurationsdaten für einen bestimmten Dienst anfordern kann. Diese MAP Nachricht 4 beinhaltet entweder den Namen des Dienstes, für den ein Update der Konfigurationsdaten benötigt wird, oder ein Kennzeichen, dass ein Update für alle Dienste, die im HLR 12 definiert sind, notwendig ist. Diese Nachricht 4 könnte "Request Update Service Parameter" genannt werden.

Eine neue MAP Nachricht 5 wird definiert, damit der SGSN 11 ein Update der Dienstparameter gegenüber dem HLR 12 bestätigen und quittieren kann. Diese Nachricht 5 könnte "Update Service Parameter Ack" genannt werden.

Es ist auch möglich, existierende MAP Nachrichten für einen Datenaustausch zwischen SGSN 11 und HLR 12 zu modifizieren.

Hierbei besteht die Möglichkeit der Abfrage von Konfigurationsdaten durch den SGSN 11 beim HLR 12 in der Verwendung der standardisierten Nachricht "Send Authentication Information request" 4*. Die Nachricht 4* wird zur Authentifikation des mobilen Endgeräts 10 vom SGSN 11 an das HLR 12 gesendet. In der Nachricht "Send Authentication Information request" 4* wird ein neues optionales Informationselement definiert. Dieses neue Informationselement könnte "last update" heißen und beinhaltet den Zeitpunkt, an dem das Endgerät 10 zum letzten Mal eine (mindestens eine) Änderung seines Parametersatzes der Konfigurationsdaten durchgeführt hat. Die Nachricht 4* wird beispielsweise in Folge der Nachricht 1 gesendet und enthält die Informationen des Informationselements der Nachricht 1.

Das HLR 12 antwortet auf die Nachricht "Send Authentication Information request" 4* standardgemäß mit einer Nachricht "Send Authentication Information Response" 3*. In der Nachricht "Send Authentication Information response" 3* wird ein neues Informationselement definiert. Dieses neue Informationselement könnte "Parameter for update" heißen und beinhaltet die Liste von Konfigurationsparametern, die für ein oder mehrere Dienste im Endgerät 10 geändert werden müssen.

Im SGSN 11 werden die Konfigurationsdaten für eigene Kunden und für Roamingpartner gespeichert. Durch den Länder Code (MCC) und den Netzwerk Code (MNC) kann der SGSN 11 die Konfigurationsdaten von jedem Roamingpartner und vom eigenen Kunden unterscheiden.

Zum Beispiel: Der SGSN 11 kann eine Tabelle vorhalten:

| | | | | |
|---|---|---|---|---|
| Eigener Kunde | MMS Parameter... | Push to Talk Parameter... | ... | ... |
| MCC262, MNC08 | MMS Parameter... | Push to Talk Parameter... | ... | ... |

Im HLR 12 werden die Konfigurationsdaten durch den Betreiber des Mobilfunknetzes oder einen Dienstprovider ständig auf dem aktuellen Stand gehalten.

Im Ausführungsbeispiel gemäß Figur 2 wird die Erfindung anhand einer leitungsvermittelten Datenübertragung in einem GSM Mobilfunknetz beschrieben. Am Verfahren sind grundsätzlich ein mobiles Endgerät 10, beispielsweise ein GSM-fähiges Mobiltelefon, eine Mobilvermittlungsstelle MSC 13 und ein dem mobilen Endgerät bzw. dem Teilnehmer zugeordnetes Heimatregister HLR 12 beteiligt. Über standardisierte Schnittstellen, beispielsweise Um-Schnittstelle oder MAP-Schnittstelle, können die beteiligten Komponenten untereinander Daten austauschen.

Vorzugsweise werden existierende Nachrichten für den Datenaustausch zwischen Endgerät 10 und MSC 13 durch Aufnahme von neuen Informationselementen modifiziert. Bei der Anmeldung des mobilen Endgeräts 10 im GSM Netzwerk, muss eine sogenannte Location Update Prozedur durchgeführt werden, wie sie beispielsweise im technischen Standard TS 24.008 beschrieben ist. Hierbei sendet das Endgerät eine "Location Update Request" Nachricht 6 an das MSC13. In der "Location Update Request " Nachricht 6, wird ein neues Informationselement definiert. Dieses neue Informationselement könnte "last update" heißen und beinhaltet Informationen über den Zeitpunkt, an dem das Endgerät 10 zum letzten Mal eine (mindestens eine) Änderung seiner Konfigurationsdaten durchgeführt hat.

Das MSC 13 überprüft anhand der Informationen des Endgerätes 10, ob für mindestens einen vom Endgerät unterstützen Dienst ein neuer Satz von Konfigurationsdaten zur Verfügung steht. Wenn dies nicht der Fall ist, wird die übliche Location Update Prozedur durchgeführt. Wenn dies der Fall ist, übermittelt das MSC 13 zusammen mit der standardgemäßen "Location Update Accept" Nachricht 7 einen Parametersatz oder mehrere Parametersätze von Konfigurationsdaten für ein oder mehrere Dienste an das Endgerät 10. Hierzu wird in der "Location Update Accept" Nachricht ein neues Informationselement definiert. Dieses neue Informationselement könnte "Parameter for update" heißen und beinhaltet die Liste der Konfigurationsparameter, die für einen oder mehrere Dienste im Endgerät 10 geändert werden müssen. Wenn ein neuer Satz von Konfigurationsparameter oder mehrere neue Parametersätze zum Endgerät 10 geschickt wurden, überschreibt das Endgerät 10 den oder die alten Parametersätze mit dem oder den neuen Parametersätzen und speichert den Zeitpunkt des letzten Updates.
Wenn ein Endgerät einen Parametersatz bekommt für einen Dienst den es nicht unterstützt, so wird der Zeitstempel des letzten Updates mit dem aktuellen Zeitpunkt überschreiben, wobei aber die eigentlichen Konfigurationsdaten für diesen Dienst ignoriert werden.
Wenn ein Endgerät 10 das erfindungsgemäße Verfahren nicht unterstützt oder nicht nutzen soll, so wird kein Zeitstempel zur MSC 13 geschickt, und die übliche Location Update Prozedur durchgeführt.

Das MSC 13 hält in einem Speicher eine Liste von Konfigurationsdaten vor, die für sein eigenes Mobilfunknetz definiert sind und gegebenenfalls für die Roamingpartner. Das MSC 13 könnte für Kunden aus dem eigenen Netz eine andere Prozedur als für Roamingkunden benutzen. Das MSC 13 könnte auch auf ein Update der Parameter für Roamingkunden verzichten.

Diese Liste mit Konfigurationsdaten wurde dem MSC 13 entweder vorab vom HLR 12 zur Verfügung gestellt und liegt dort bereits vor, oder wird aktiv vom MSC 13 angefordert, falls das Endgerät ein Update der Konfigurationsdaten benötigt oder vom Betreiber in der MSC 13 direkt eingeben.

Eine automatische Aktualisierung der Konfigurationsdaten im MSC 13 durch das HLR 12 kann wie folgt durchgeführt werden:
Es wird eine neue MAP Nachricht 3 definiert, mittels welcher das HLR 12 dem MSC 13 eine Liste von Konfigurationsdaten für das Endgerät zusenden kann. Diese Nachricht 3 beinhaltet eine Liste von Konfigurationsparametern für einen oder mehrere Dienste, sowie die Netzwerk- und Landeskennung (Mobile Country Code, Mobile Network Code) des Betreibers des HLR 12. Diese MAP Nachricht könnte "Update Service Parameter" genannt werden.

Eine Aktualisierung der Konfigurationsdaten im MSC 13 durch das HLR 12 auf Anforderung des MSC 13 kann wie folgt durchgeführt werden:
Eine neue MAP Nachricht 4 wird definiert, mittels welcher das MSC 13 beim HLR 12 aktiv ein Update von Konfigurationsdaten für einen bestimmten Dienst anfordern kann. Diese MAP Nachricht 4 beinhaltet entweder den Namen des Dienstes, für den ein Update der Konfigurationsdaten benötigt wird, oder ein Kennzeichen, dass ein Update für alle Dienste, die im HLR definiert sind, notwendig ist. Diese Nachricht könnte "Request Update Service Parameter" genannt werden.

Eine neue MAP Nachricht 5 wird definiert, damit das MSC 13 ein Update der Dienstparameter gegenüber dem HLR 12 bestätigen und quittieren kann. Diese Nachricht 5 könnte "Update Service Parameter Ack" genannt werden.

Es ist auch möglich, existierende MAP Nachrichten für einen Datenaustausch zwischen MSC 13 und HLR 12 zu modifizieren.
Hierbei besteht die Möglichkeit der Abfrage von Konfigurationsdaten durch das MSC 13 beim HLR 12 in der Verwendung der standardisierten Nachricht "Send Authentication Information request" 4*. Die Nachricht 4* wird zur Authentifikation des mobilen Endgeräts 10 vom MSC 13 an das HLR 12 gesendet. In der Nachricht "Send Authentication Information request" 4* wird ein neues optionales Informationselement definiert. Dieses neue Informationselement könnte "last update" heißen und beinhaltet den Zeitpunkt, an dem das Endgerät 10 zum letzten Mal eine (mindestens eine) Änderung seines Parametersatzes der Konfigurationsdaten durchgeführt hat. Diese Information hat die MSC13 in der Nachricht 6 vom mobilen Endgerät 10 erhalten.

Das HLR 12 antwortet auf die Nachricht "Send Authentication Information request" 4* des MSC 13 standardgemäß mit einer, Nachricht "Send Authentication Information Response" 3*. In der Nachricht "Send Authentication Information response" 3* wird ein neues Informationselement definiert. Dieses neue Informationselement könnte "Parameter for update" heißen und beinhaltet die Liste von Konfigurationsparametern, die für ein oder mehrere Dienste im Endgerät 10 geändert werden müssen.

Im HLR 12 werden die Konfigurationsdaten durch den Betreiber des Mobilfunknetzes oder einen Dienstprovider ständig auf dem aktuellen Stand gehalten.

In der MSC 13 werden die Konfigurationsdaten für eigene Kunden und für Roamingpartner gespeichert. Durch den Länder Code (MCC) und den Netzwerk Code (MNC) kann der SGSN die Konfigurationsdaten von jedem Roamingpartner und vom eigenen Kunde unterscheiden.

Zum Beispiel: Der SGSN kann eine Tabelle halten:

| | | | | |
|---|---|---|---|---|
| Eigener Kunde | SMS Parameter... | ... | ... | ... |
| MCC262, MNC08 | SMS Parameter... | ... | ... | ... |

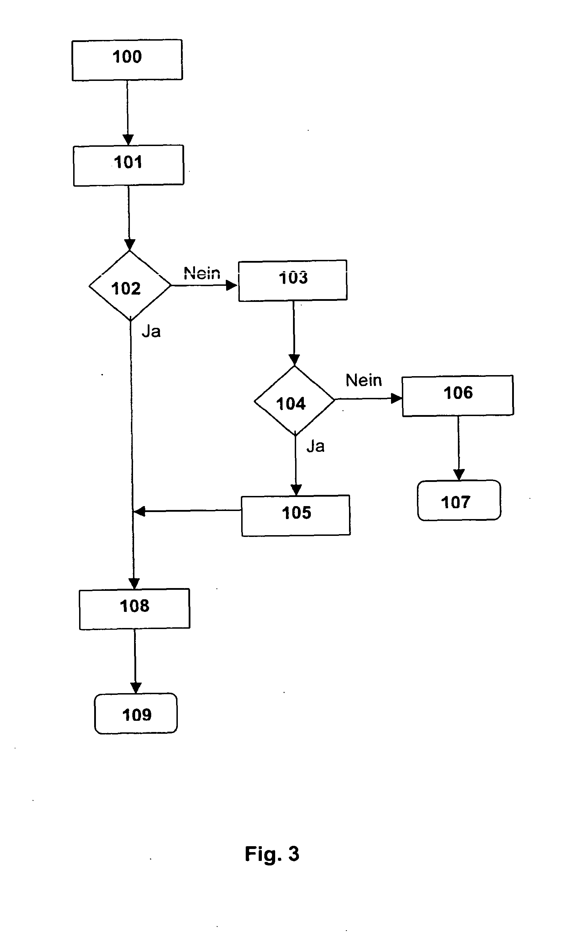

Figur 3 zeigt nochmals den vereinfachten Verfahrenablauf:

In einem ersten Schritt 100 meldet sich das mobile Endgerät bei einem datenvermittelnden Netzelement des Mobilfunknetzes an und überträgt in der Anmeldungsnachricht zusätzliche Statusdaten. Die Statusdaten enthalten zumindest Informationen über den Zeitpunkt der letzten Änderung der Konfigurationsdaten der vom Endgerät unterstützen Dienste.

In einem Schritt 101 wird im datenvermittelnden Netzelement anhand der Statusdaten festgestellt, ob eine Aktualisierung der Konfigurationsdaten im mobilen Endgerät vorgenommen werden muss. In einem Schritt 102 wird ferner geprüft, ob im datenvermittelnden Netzelement aktuelle Konfigurationsdaten vorhanden sind. Falls aktuelle Konfigurationsdaten vorhanden sind, werden in einem Schritt 108 diese aktuellen Konfigurationsdaten vom datenvermittelnden Netzelement an das mobile Endgerät übertragen, beispielsweise zusammen mit einer Anmeldebestätigung. Im Endgerät werden die aktuellen Konfigurationsdaten gespeichert und das Verfahren bei Schritt 109 beendet.

Falls im Schritt 102 festgestellt wird, dass im datenvermittelnden Netzelement keine aktuellen Konfigurationsdaten vorhanden sind, fordert das datenvermittelnde Netzelement in einem Schritt 103 aktuelle Konfigurationsdaten für das mobile Endgerät von einem datenspeichernden Netzelement an.

In einem Schritt 104 wird vom datenspeichernden Netzelement geprüft, ob dort aktuelle Konfigurationsdaten vorhanden sind. Falls aktuelle Konfigurationsdaten vorhanden sind, werden in einem Schritt 105 diese aktuellen Konfigurationsdaten vom datenspeichernden Netzelement an das datenvermittelnde Netzelement übermittelt, beispielsweise über eine MAP Nachricht. Im datenvermittelnden Netzelement werden die aktuellen Konfigurationsdaten gespeichert und in einem Schritt 108 vom datenvermittelnden Netzelement an das mobile Endgerät übertragen, beispielsweise zusammen mit einer Anmeldebestätigung. Im Endgerät werden die aktuellen Konfigurationsdaten gespeichert und das Verfahren bei Schritt 109 beendet.

Wird im Schritt 104 festgestellt, dass auch im datenspeichernden Netzelement keine aktuellen Konfigurationsdaten vorhanden sind, so wird in einem Schritt 106 mit der regulären Anmeldung des Endgeräts fortgefahren und das Verfahren bei Schritt 107 beendet.

Der Betreiber kann auch manuell den Schritt 103 im datenvermittelnden Netzelement anfordern.

### Liste der Bezugszeichen

- 1: Nachricht "Attach Request"
- 2: Nachricht "Attach Accept"
- 3: Nachricht "Update Service Parameter"
- 3*: Nachricht "Send Authentication Information Response"
- 4: Nachricht "Request Update Service Parameter"
- 4*: Nachricht "Send Authentication Information Request"
- 5: Nachricht "Update Service Parameter Ack"
- 6: Nachricht "Location Update Request"
- 7: Nachricht "Location Update Accept"

- 10: mobiles Endgerät
- 11: GPRS Dienstknoten SGSN
- 12: Heimatregister HLR
- 13: Mobilvermittlungsstelle MSC

- 100-109: Verfahrensschritte

## Patentansprüche

1. Verfahren zum Konfigurieren von Diensten in einem mobilen Endgerät (10) eines Mobilfunknetzes, wobei dass Konfigurationsdaten von einem datenvermittelnden Netzelement (11; 13) des Mobilfunknetzes in bestehenden Signalisierungs- oder Systemnachrichten (2; 7) an das mobile Endgerät übertragen werden, **dadurch gekennzeichnet,**
**dass** vor einer Übermittlung der Konfigurationsdaten Statusdaten vom mobilen Endgerät (10) in bestehenden Signalisierungs- oder Systemnachrichten (1; 6) an das datenvermittelnde Netzelement (11; 13) des Mobilfunknetzes übertragen werden,
**dass** im datenvermittelnden Netzelement (11; 13) anhand der Statusdaten des mobilen Endgeräts (10) geprüft wird, ob eine Aktualisierung der Konfigurationsdaten im mobilen Endgerät (10) vorgenommen werden muss, und zutreffendenfalls aktuelle Konfigurationsdaten vom datenvermittelnden Netzelement (11; 13) an das mobile Endgerät (10) übertragen werden,
wobei die Konfigurationsdaten eine Konfiguration von Parametern und Daten für Dienste, die von einem mobilen Endgerät unterstützt werden, erlauben,
wobei eine Liste von Parametern für einen oder mehrere Dienste definiert wird, und für jeden Dienst die notwendigen Parameter in einer beliebigen Reihenfolge definiert werden,
wobei wenn eine unvollständige Liste von Parametern an das mobile Endgerät gesendet wird, wird diese Liste ebenfalls akzeptiert und bearbeitet, wobei die fehlenden Parameter ignoriert werden, und das Endgerät die fehlenden Parameterwerte mit den schon vorhandenen Werten konfiguriert.

2. Verfahren nach Anspruch 1, **dadurch gekennzeichnet, dass** die Konfigurationsdaten als Informationselement in den Signalisierungs- oder Systemnachrichten (2; 7) übertragen werden.

3. Verfahren nach einem der vorhergehenden Ansprüche, **dadurch gekennzeichnet, dass** die Konfigurationsdaten mit einem Zeitstempel und/oder einer Versionskennzeichnung versehen sind.

4. Verfahren nach einem der vorhergehenden Ansprüche, **dadurch gekennzeichnet, dass** die Konfigurationsdaten in einer "Attach Accept" Nachricht (2) oder "Location Update Accept" Nachricht (7) vom datenvermittelnden Netzelement (11; 13) an das mobile Endgerät (10) übertragen werden.

5. Verfahren nach einem der vorhergehenden Ansprüche, **dadurch gekennzeichnet, dass** das datenvermittelnde Netzelement eine Mobilvermittlungsstelle MSC (13) oder ein GPRS Dienstknoten SGSN (11), oder ein Netzelement mit ähnlicher Funktion.

6. Verfahren nach einem der vorhergehenden Ansprüche, **dadurch gekennzeichnet, dass** die Statusdaten zumindest Informationen über den Zeitpunkt der letzten Änderung der Konfigurationsdaten umfassen.

7. Verfahren nach einem der vorhergehenden Ansprüche, **dadurch gekennzeichnet, dass** die Statusdaten als Informationselement in den Signalisierungs- oder Systemnachrichten (1; 6) übertragen werden.

8. Verfahren nach einem der vorhergehenden Ansprüche, **dadurch gekennzeichnet, dass** die Statusdaten in einer "Attach Request" Nachricht (1) oder "Location Update Request" Nachricht (6) vom mobilen Endgerät (10) an das datenvermittelnde Netzelement (11; 13) übertragen werden.

9. Verfahren nach einem der vorhergehenden Ansprüche, **dadurch gekennzeichnet, dass** die Konfigurationsdaten in einem datenspeichernden Netzelement (12) des Mobilfunknetzes gespeichert und dort für einen Abruf bereitgestellt werden.

10. Verfahren nach einem der vorhergehenden Ansprüche, **dadurch gekennzeichnet, dass** im Falle keine aktuellen Konfigurationsdaten im datenvermittelnden Netzelement (11; 13) vorhanden sind, das datenvermittelnde Netzelement aktuelle Konfigurationsdaten für das mobile Endgerät (10) vom datenspeichernden Netzelement (12) anfordert, wonach die aktuellen Konfigurationsdaten vom datenspeichernden Netzelement (12) an das datenvermittelnde Netzelement (11; 13) übertragen werden.

11. Verfahren nach einem der vorhergehenden Ansprüche, **dadurch gekennzeichnet, dass** das datenspeichernde Netzelement ein dem mobilen Endgerät zugeordnetes Heimatregister HLR (12) ist.

12. Verfahren nach einem der vorhergehenden Ansprüche, **dadurch gekennzeichnet, dass** die Konfigurationsdaten im datenspeichernden Netzelement (12) durch den Betreiber des Mobilfunknetzes oder einen Diensteanbieter aktualisiert werden.

13. Verfahren nach einem der vorhergehenden Ansprüche, **dadurch gekennzeichnet, dass** die Datenübertragung zwischen dem datenvermittelnden (11; 13) und dem datenspeichernden Netzelement (12) mittels Mobile Application Part Protokoll MAP erfolgt.

14. Datenverarbeitungsprogramm mit einem Programmcode der auf einer oder mehreren Datenverarbeitungseinrichtungen ausgeführt die Schritte eines Verfahrens nach einem der Ansprüche 1 bis 13 durchführt.

15. Datenverarbeitungsprogrammprodukt, das einen auf einer oder mehreren Datenverarbeitungseinrichtungen ausführbaren Programmcode zur Durchführung der Schritte eines Verfahrens nach einem der Ansprüche 1 bis 13 umfasst.

16. Vorrichtung zum Konfigurierten von Diensten in einem Endgerät (10) eines Mobilfunknetzes, mit einem datenvermittelnden Netzelement (11; 13) und einem datenspeichernden Netzelement (13) zur Aktualisierung von Konfigurationsdaten im mobilen Endgerät (10) über bestehende Signalisierungs- oder Systemnachrichten (2; 7) des Mobilfunknetzes, **gekennzeichnet durch**
Mittel zur Übermittlung von Statusdaten vom mobilen Endgerät (10) in bestehenden Signalisierungs- oder Systemnachrichten (1; 6) an das datenvermittelnde Netzelement (11; 13) des Mobilfunknetzes, und
Mittel im datenvermittelnden Netzelement (11; 13), welche anhand der Statusdaten des mobilen Endgeräts (10) prüfen, ob eine Aktualisierung der Konfigurationsdaten im mobilen Endgerät (10) vorgenommen werden muss,
Mittel zur Übertragung von aktuellen Konfigurationsdaten vom datenvermittelnden Netzelement (11; 13) an das mobile Endgerät (10), wobei die Mittel zur Übertragung der Konfigurationsdaten zur Konfiguration von Parametern und Daten für Dienste, die von einem mobilen Endgerät unterstützt werden, derart ausgestaltet sind, dass sie eine Liste von Parametern für einen oder mehrere Dienste definieren, und für jeden Dienst die notwendigen Parameter in einer beliebigen Reihenfolge definieren, und dass sie ggf. eine unvollständige Liste von Parametern an das mobile
Endgerät senden und Mittel im Endgerät zum Akzeptieren und Bearbeiten der unvollständigen Liste derart, dass die fehlenden Parameter ignoriert werden, und das Endgerät die fehlenden Parameterwerte mit den schon vorhandenen Werten konfiguriert.

## Claims

1. Method for configuring services in a mobile terminal (10) of a mobile telephone network, wherein configuration data are transmitted from a data-switching network element (11; 13) of the mobile telephone network in existing signalling or system messages (2; 7) to the mobile terminal, **characterised in that**, before transmitting the configuration data, status data are transmitted from the mobile terminal (10) in existing signalling or system messages (1; 6) to the data-switching network element (11; 13) of the mobile telephone network, **in that** in the data-switching network element (11; 13) it is checked with the aid of the status data of the mobile terminal (10) whether updating of the configuration data in the mobile terminal (10) must be carried out, and if applicable up-to-date configuration data are transmitted from the data-switching network element (11; 13) to the mobile terminal (10), wherein the configuration data allow the configuration of parameters and data for services which are supported by a mobile terminal, wherein a list of parameters is defined for one or more services, and for each service the necessary parameters are defined in any order, wherein, when an incomplete list of parameters is sent to the mobile terminal, this list is likewise accepted and processed, wherein the missing parameters are ignored, and the terminal configures the missing parameter values with the already existing values.

2. Method according to claim 1, **characterised in that** the configuration data are transmitted as an information element in the signalling or system messages (2; 7).

3. Method according to one of the preceding claims, **characterised in that** the configuration data are provided with a time stamp and/or version label.

4. Method according to one of the preceding claims, **characterised in that** the configuration data are transmitted in an attach accept message (2) or location update accept message (7) from the data-switching network element (11; 13) to the mobile terminal (10).

5. Method according to one of the preceding claims, **characterised in that** the data-switching network element is a mobile switching centre MSC (13) or a serving GPRS support node SGSN (11), or a network element with a similar function.

6. Method according to one of the preceding claims, **characterised in that** the status data comprise at least information on the time of the last change to the configuration data.

7. Method according to one of the preceding claims, **characterised in that** the status data are transmitted as an information element in the signalling or system messages (1; 6).

8. Method according to one of the preceding claims, **characterised in that** the status data are transmitted in an attach request message (1) or location update request message (6) from the mobile terminal (10) to the data-switching network element (11; 13).

9. Method according to one of the preceding claims, **characterised in that** the configuration data are stored in a data-storing network element (12) of the mobile telephone network and there provided for retrieval.

10. Method according to one of the preceding claims, **characterised in that**, in the event that there are no up-to-date configuration data in the data-switching network element (11; 13), the data-switching network element requests up-to-date configuration data for the mobile terminal (10) from the data-storing network element (12), whereupon the up-to-date configuration data are transmitted from the data-storing network element (12) to the data-switching network element (11; 13).

11. Method according to one of the preceding claims, **characterised in that** the data-storing network element is a home location register HLR (12) associated with the mobile terminal.

12. Method according to one of the preceding claims, **characterised in that** the configuration data are updated in the data-storing network element (12) by the operator of the mobile telephone network or a service provider.

13. Method according to one of the preceding claims, **characterised in that** data transmission between the data-switching network element (11; 13) and the data-storing network element (12) is effected by means of a mobile application part protocol MAP.

14. Data processing program with a program code which, executed on one or more data processing devices, performs the steps of a method according to one of claims 1 to 13.

15. Data processing program product which comprises a program code that can be executed on one or more data processing devices for performing the steps of a method according to one of claims 1 to 13.

16. Device for configuring services in a terminal (10) of a mobile telephone network, having a data-switching network element (11; 13) and a data-storing network element (13) for updating configuration data in the mobile terminal (10) via existing signalling or system messages (2; 7) of the mobile telephone network, **characterised by** means for transmitting status data from the mobile terminal (10) in existing signalling or system messages (1; 6) to the data-switching network element (11; 13) of the mobile telephone network, and means in the data-switching network element (11; 13) which check with the aid of the status data of the mobile terminal (10) whether updating of the configuration data in the mobile terminal (10) must be carried out, means for transmitting up-to-date configuration data from the data-switching network element (11; 13) to the mobile terminal (10), wherein the means for transmitting the configuration data for the reconfiguration of parameters and data for services which are supported by a mobile terminal are designed so as to define a list of parameters for one or more services, and for each service define the necessary parameters in any order, and in that if necessary they send an incomplete list of parameters to the mobile terminal, and means in the terminal for accepting and processing the incomplete list in such a way that the missing parameters are ignored, and the terminal configures the missing parameter values with the already existing values.

## Revendications

1. Procédé pour configurer des services dans un terminal mobile (10) d'un réseau de téléphonie mobile, étant précisé que des données de configuration sont transmises par un élément de réseau de communication de données (11 ; 13) du réseau mobile, dans des messages de signalisation ou de système existants (2 ; 7), au terminal mobile,
**caractérisé en ce qu'**avant une transmission des données de configuration, des données d'état sont transmises par le terminal mobile (10), dans des messages de signalisation ou de système existants (1 ; 6), à l'élément de réseau de communication de données (11 ; 13) du réseau mobile,
**en ce que** dans l'élément de réseau de communication de données (11 ; 13), on vérifie à l'aide des données d'état du terminal mobile (10) s'il faut procéder à une actualisation des données de configuration dans le terminal mobile (10) et, si oui, des données de configuration actuelles sont transmises par l'élément de réseau de communication de données (11 ; 13) au terminal mobile (10),
étant précisé que les données de configuration permettent une configuration de paramètres et de données pour des services qui sont supportés par un terminal mobile,
qu'une liste de paramètres est définie pour un ou plusieurs services, et que pour chaque service, les paramètres nécessaires sont définis dans n'importe quel ordre,
que si une liste incomplète de paramètres est envoyée au terminal mobile, cette liste est également acceptée et traitée, les paramètres manquants étant ignorés et le terminal configurant les valeurs de paramètres manquantes avec les valeurs déjà présentes.

2. Procédé selon la revendication 1, **caractérisé en ce que** les données de configuration sont transmises comme élément d'information dans les messages de signalisation ou de système (2 ; 7).

3. Procédé selon l'une des revendications précédentes, **caractérisé en ce que** les données de configuration sont pourvues d'un horodatage et/ou d'une identification de version.

4. Procédé selon l'une des revendications précédentes, **caractérisé en ce que** les données de configuration sont transmises au terminal mobile (10) par l'élément de réseau de communication de données (11 ; 13) dans un message "Attach Accept" (2) ou dans un message "Location Update Accept" (7).

5. Procédé selon l'une des revendications précédentes, **caractérisé en ce que** l'élément de réseau de communication de données comporte un centre de commutation mobile MSC (13) ou un noeud de service SGSN GPRS (11) ou un élément de réseau à fonction similaire.

6. Procédé selon l'une des revendications précédentes, **caractérisé en ce que** les données d'état comprennent au moins des informations sur le moment de la dernière modification des données de configuration.

7. Procédé selon l'une des revendications précédentes, **caractérisé en ce que** les données d'état sont transmises comme élément d'information dans les messages de signalisation ou de système (1 ; 6).

8. Procédé selon l'une des revendications précédentes, **caractérisé en ce que** les données d'état sont transmises à l'élément de réseau de communication de données (11 ; 13) par le terminal mobile (6) dans un message "Attach Request" (1) ou dans un message "Location Update Request" (6).

9. Procédé selon l'une des revendications précédentes, **caractérisé en ce que** les données de configuration sont stockées dans un élément de réseau de stockage de données (12) du réseau mobile, où elles sont disponibles pour une consultation.

10. Procédé selon l'une des revendications précédentes, **caractérisé en ce que**, au cas où il n'y a pas de données de configuration actuelles dans l'élément de réseau de communication de données (11 ; 13), ce dernier demande à l'élément de réseau de stockage de données (12) des données de configuration actuelles pour le terminal mobile (10), après quoi les données de configuration actuelles sont transmises par l'élément de réseau de stockage de données (12) à l'élément de réseau de communication de données (11 ; 13).

11. Procédé selon l'une des revendications précédentes, **caractérisé en ce que** l'élément de réseau de stockage de données est un enregistreur de localisation nominal HLR (12) attribué au terminal mobile.

12. Procédé selon l'une des revendications précédentes, **caractérisé en ce que** les données de configuration sont actualisées dans l'élément de réseau de stockage de données (12), par l'opérateur du réseau mobile ou par un fournisseur de services.

13. Procédé selon l'une des revendications précédentes, **caractérisé en ce que** la transmission de données entre l'élément de réseau de communication de données (11 ; 13) et l'élément de réseau de stockage de données (12) se fait à l'aide d'un protocole de sous-système d'application mobile MAP.

14. Programme de traitement de données avec un code de programme qui, exécuté sur un ou plusieurs dispositifs de traitement de données, met en oeuvre les étapes d'un procédé selon l'une des revendications 1 à 13.

15. Produit de programme de traitement de données qui comprend un code de programme apte à être exécuté sur un ou plusieurs dispositifs de traitement de données, pour la mise en oeuvre des étapes d'un procédé selon l'une des revendications 1 à 13.

16. Dispositif pour configurer des services dans un terminal mobile (10) d'un réseau de téléphonie mobile, avec un élément de réseau de communication de données (11 ; 13) et un élément de réseau de stockage de données (13) pour l'actualisation de données de configuration dans le terminal mobile (10) par l'intermédiaire de messages de signalisation ou de système existants (2 ; 7) du réseau mobile,
**caractérisé par**
des moyens pour la transmission à l'élément de réseau de communication de données (11 ; 13) du réseau mobile, par le terminal mobile (10), de données d'état dans des messages de signalisation ou de système existants (1 ; 6), et
des moyens, dans l'élément de réseau de communication de données (11 ; 13), qui vérifient à l'aide des données d'état du terminal mobile (10) s'il faut procéder à une actualisation des données de configuration dans le terminal mobile (10),
des moyens pour la transmission au terminal mobile (10), par l'élément de réseau de communication de données (11 ; 13), de données de configuration actuelles, étant précisé que les moyens pour la transmission des données de configuration sont conçus, pour la configuration de paramètres et de données pour des services qui sont supportés par un terminal mobile, de manière à définir une liste de paramètres pour un ou plusieurs services, et à définir pour chaque service les paramètres nécessaires, dans n'importe quel ordre, et à envoyer le cas échéant une liste incomplète de paramètres au terminal mobile,
et des moyens, dans le terminal, pour accepter et traiter la liste incomplète de telle sorte que les paramètres manquants soient ignorés et que le terminal configure les valeurs de paramètres manquantes avec les valeurs déjà présentes.
